# EUROPÄISCHE PATENTSCHRIFT

(11) **EP 0 465 829 B1**
(45) Veröffentlichungstag und Bekanntmachung des Hinweises auf die Patenterteilung: **11.01.1995**
(21) Anmeldenummer: 91109244.3
(22) Anmeldetag: 06.06.1991
(51) Int. Cl.: C09B 62/405, D06P 1/382

(54) **Azoreaktivfarbstoffe**
Reactive azodyes
Colorants azoiques réactifs

(30) Priorität: 19.06.1990 DE 4019421; 17.10.1990 DE 4032923
(43) Veröffentlichungstag der Anmeldung: 15.01.1992
(73) Patentinhaber: BAYER AG, 51368 Leverkusen (DE)
(72) Erfinder: Herd, Karl-Josef, Dr., W-5068 Odenthal (DE); Schündehütte, Karl-Heinz, Prof. Dr., W-5090 Leverkusen 3 (DE); Jäger, Horst, Dr., W-5090 Leverkusen 1 (DE)

(56) Entgegenhaltungen:
- EP-A- 0 281 898
- DE-A- 2 123 061
- FR-A- 2 202 088
- GB-A- 2 014 177

## Beschreibung

Gegenstand der Erfindung sind Monoazoreaktivfarbstoffe, die in Form der freien Säure der Struktur (1) 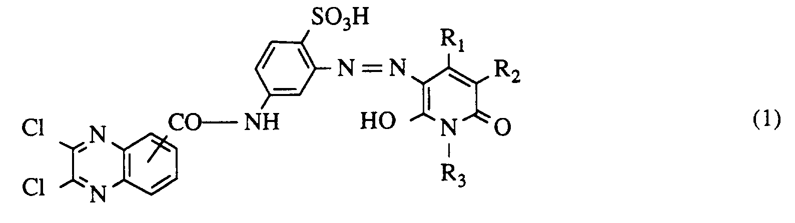
entsprechen, wobei
- R₁ =: H, gegebenenfalls substituiertes C₁-C₆-Alkyl, CO₂H, CH₂SO₃H, C₆H₅, 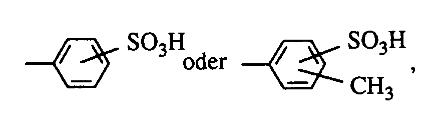
- R₂ =: H, CH₃, Cl, Br, SO₃H, 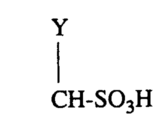 oder CH₂CO₂H
wobei
- Y: für Wasserstoff oder gegebenenfalls substituiertes C₁-C₆-Alkyl steht,
- R₃ =: H, gegebenenfalls substituiertes C₁-C₆-Alkyl, 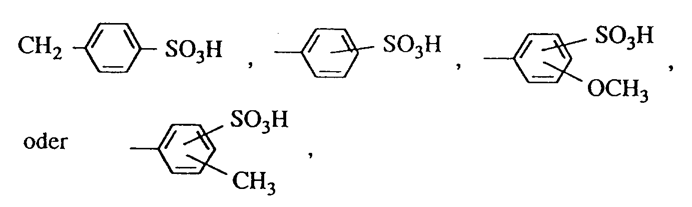
mit der Maßgabe, daß der Pyridonrest mit wenigstens einem Sulfato- oder Sulfonsäurerest substituiert ist.

Aus GB-A-2 014 177, Seite 10, ist zwar eine strukturell scheinbar ähnliche Verbindung bekannt, die aber hinsichtlich ihrer anwendungstechnischen Eigenschaften noch nicht zufriedenstellend ist.

Beispiele für Substituenten der gegebenenfalls substituierten C₁-C₆-Alkyl-Reste in der Definition von R₁, R₃ und Y sind Hydroxy, Methoxy, Ethoxy, Carboxy, Methyl, Chlor, Sulfo und Sulfato.

Hervorzuheben sind Farbstoffe der Struktur (2) 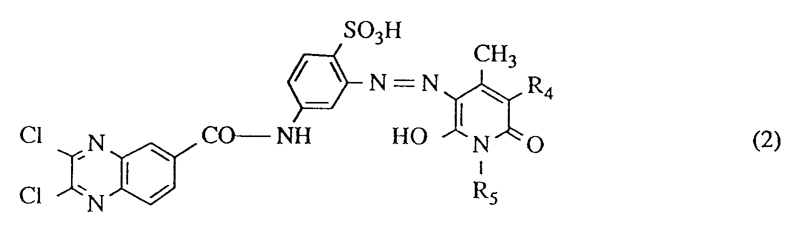
wobei
- R₄ =: CH₂SO₃H, SO₃H und 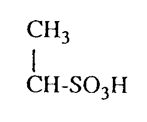
- R₅: für Wasserstoff oder gegebenenfalls durch Hydroxy, Methoxy, Ethoxy, Carboxy oder Chlor substituiertes C₁-C₄-Alkyl steht, sowie Farbstoffe der Struktur (3) 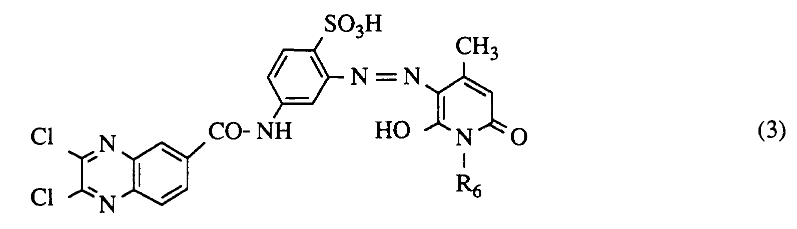 wobei
- R₆ =: CH₂CH₂SO₃H, CH₂CH₂OSO₃H,

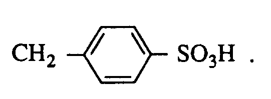

Besonders bevorzugt sind Farbstoffe der Struktur (4) 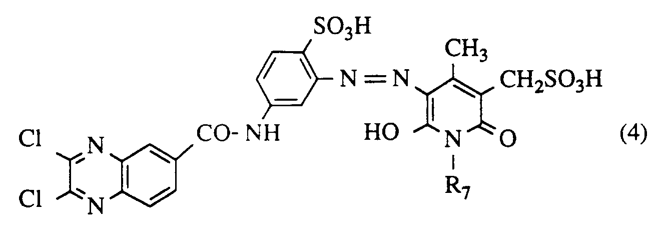
wobei
- R₇ =: H, CH₃ oder C₂H₅.

Gegenstand der Erfindung ist auch das Verfahren zur Herstellung der Reaktivfarbstoffe der Struktur (1), indem man
a) Aminoazofarbstoffe der Struktur (5), 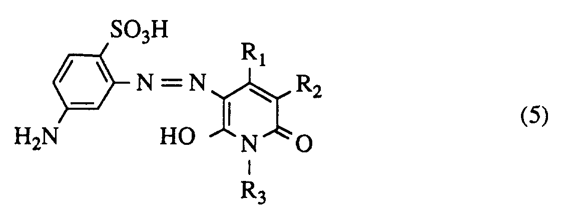 wobei
   R₁, R₂ und R₃ die anfangs genannte Bedeutung haben,
   mit 2,3-Dichlor-6-(bzw.5-)chinoxalincarbonsäurechlorid in Gegenwart säurebindender Mittel kondensiert, oder aber
b) das Monokondensationsprodukt aus 2,4-Diaminobenzolsulfonsäure und 2,3-Dichlor-6-(bzw.5-)chinoxalincarbonsäurechlorid in üblicher Weise diazotiert und auf Pyridone der Struktur (6) oder solche der Struktur (7), 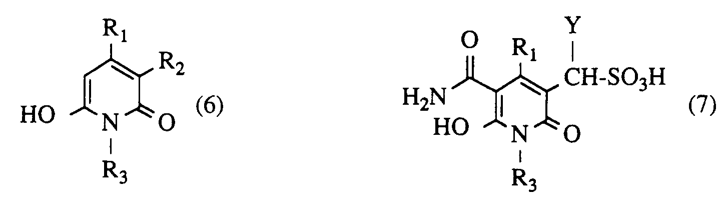 wie sie z.B. in der DE-OS 2 162 858 aufgeführt sind,
   wobei
   R₁, R₂ und R₃ die anfangs genannte Bedeutung zukommt,
   kuppelt.

Die Aminoazoverbindungen der Struktur (5) erhält man durch Kuppeln von diazotierter 4-Acylamino-2-aminobenzolsulfonsäure auf Pyridone der Struktur (6) oder (7) und anschließende saure Verseifung der resultierenden Acylaminoazoverbindungen.

Ausgewählte Beispiele für sulfogruppenhaltige Pyridone der Struktur (6) und (7) sind u.a.:
3-Aminocarbonyl-1,4-dimethyl-5-sulfomethyl-6-hydroxy-2-pyridon,
3-Aminocarbonyl-1-ethyl-4-methyl-5-sulfomethyl-6-hydroxy-2-pyridon,
1,4-Dimethyl-5-sulfo-6-hydroxy-2-pyridon,
4-Methyl-5-sulfo-1-(4'-sulfobenzyl)-6-hydroxy-2-pyridon,
1-Methyl-4-sulfomethyl-6-hydroxy-2-pyridon,
1-Ethyl-3,4-bis-(sulfomethyl)-6-hydroxy-2-pyridon,
4-Methyl-1-(2'-sulfoethyl)-6-hydroxy-2-pyridon,
4-Methyl-1-(2'-sulfatoethyl)-6-hydroxy-2-pyridon,
4-Methyl-1-(2'-sulfatoethyl)-3-sulfo-6-hydroxy-2-pyridon,
3-Chlor-4-methyl-1-(2'-sulfoethyl)-6-hydroxy-2-pyridon,
3,4-Dimethyl-1-(2'-sulfatoethyl)-6-hydroxy-2-pyridon,
4-Carboxy-3-sulfomethyl-6-hydroxy-2-pyridon,
1-Ethyl-4-isopropyl-3-sulfomethyl-5-carbamoyl-6-hydroxy-pyridon-(2),
1,4-Diethyl-3-sulfomethyl-5-carbamoyl-6-hydroxy-pyridon-(2),
1-Methyl-4-isopropyl-3-sulfomethyl-5-carbamoyl-6-hydroxy-pyridon-(2),
1-Ethyl-4-propyl-3-sulfomethyl-5-carbamoyl-6-hydroxy-pyridon-(2),
4-Methyl-3-sulfomethyl-5-carbamoyl-2,6-dihydroxy-pyridin,
1-Methyl-3-sulfomethyl-4-methyl-6-hydroxy-pyridon-(2),
1-Ethyl-3-sulfomethyl-4-methyl-6-hydroxy-pyridon-(2),
1-(β-Hydroxyethyl)-3-sulfomethyl-4-methyl-6-hydroxy-pyridon-(2),
1-Butyl-3-sulfomethyl-4-methyl-6-hydroxy-pyridon-(2),
1,4-Dimethyl-3-sulfomethyl-6-hydroxy-pyridon-(2),
1-(β-Methoxyethyl)-3-sulfomethyl-4-methyl-6-hydroxy-pyridon-(2),
1-Propyl-3-sulfomethyl-4-methyl-6-hydroxy-pyridon-(2),
1-(β-Acetylaminoethyl)-3-sulfomethyl-4-methyl-6-hydroxy-pyridon-(2),
1-(γ-Dimethylaminopropyl)-3-sulfomethyl-4-methyl-6-hydrox y-pyridon-(2) und 3-Sulfomethyl-4-methyl-2,6-dihydroxy-pyridin.

Die Reaktionsbedingungen der Herstellung entsprechen den auf dem Gebiet der Acylierung, Diazotierung und Kupplung üblichen Bedingungen. So erfolgt die Herstellung der erfindungsgemäßen Farbstoffe und Farbstoffzwischenprodukte vorzugsweise im wäßrigen Medium. Die Kondensation mit dem 2,3-Dichlorchinoxalincarbonsäurechlorid wird bei 30 bis 60°C, vorzugsweise 40 bis 50°C, in neutralem bis schwach saurem Medium ausgeführt, wobei die bei der Kondensation freiwerdende Salzsäure durch Zugabe von basischen Substanzen neutralisiert wird. Diese können sowohl in fester wie auch gelöster Form zugesetzt werden. Als Beispiel seien genannt: LiOH, Li₂CO₃, NaOH, Na₂CO₃, NaHCO₃, KOH, K₂CO₃, MgO, MgCO₃, Ca(OH)₂, CaCO₃.

Die Reaktivfarbstoffe der Formel (I) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls durch Zugabe eines Puffer-Gemisches, beispielsweise Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d.h. ohne Zwischenisolierung der Farbstoffe herstellen.

Die Azoreaktivfarbstoffe der Struktur (1) färben hydroxylgruppenhaltiges Fasermaterial, insbesondere Baumwolle, in brillanten gelben Nuancen. Die Farbstoffe zeigen ein hervorragendes Aufziehvermögen und liefern hohe Fixierausbeuten. Das Echtheitsniveau der Färbungen ist ausgezeichnet. Die Färbungen sind ätzbar.

Die oben angegebenen Formeln sind die der freien Säuren. Im allgemeinen erhält man bei der Synthese Salze, auf die sich die vorliegende Erfindung ebenfalls bezieht, im allgemeinen die Alkalisalze, insbesondere die Na- oder Li-Salze und verwendet die Farbstoffe auch in dieser Form zum Färben.

### Beispiel 1:

33,4 g 4-Acetamino-2-aminobenzolsulfonsäure werden in bekannter Weise unter sauren Bedingungen mit Natriumnitritlösung diazotiert Zur fertigen Diazoniumsalzsuspension fügt man 39,5 g 3-Aminocarbonyl-1,4-dimethyl-5-sulfomethyl-6-hydroxy-2-pyridon und stellt den pH der Reaktionsmischung langsam mit 20 %iger Sodalösung auf pH 7,5 und hält ihn konstant. Nach 30 Minuten ist die Kupplung beendet.

Die Farbstoffmischung (Volumen ca. 700 ml) wird nun mit 100 ml konzentrierter Salzsäure sauer gestellt und für 1 Stunde auf 95-98°C erwärmt. Dabei resultiert kurzzeitig eine tiefgelbe Lösung. Gegen Ende der Verseifung fällt die Aminoazoverbindung in kristalliner Form aus. Es wird auf Raumtemperatur abgekühlt und nach Zugabe von 40 g Kochsalz abgesaugt.

Die feuchte gelbe Paste wird in 400 ml Wasser angerührt und mit Lithiumhydroxidlösug bei pH 6,5 gelöst. Die auf 45°C erwärmte Lösung wird mit 44 g frisch sublimiertem 2,3-Dichlor-6-chinoxalincarbonsäurechlorid versetzt. Die Acylierungsreaktion hält man nun durch Zudosieren von Sodalösung konstant zwischen 6,5 und 7,0. Die Temperatur beträgt weiterhin 45°C. Nachem keine pH-Änderung mehr zu beobachten ist, erhöht man auf 50°C, fügt 10 g Filterhilfe und 5 g Aktivkohle zu und klärt die Lösung ab. Zum warmen Filtrat fügt man 30 g Kochsalz und rührt so lange, bis Raumtemperatur erreicht ist. Der gelbe Reaktivfarbstoff wird abgesaugt und bei 70°C getrocknet Man erhält 120 g eines salzhaltigen Farbstoffpulvers, das Baumwolle in brillantem, grünstichig gelben Ton färbt und dem nachstehende Struktur zukommt (λₘₐₓ (H₂O) = 423 nm). 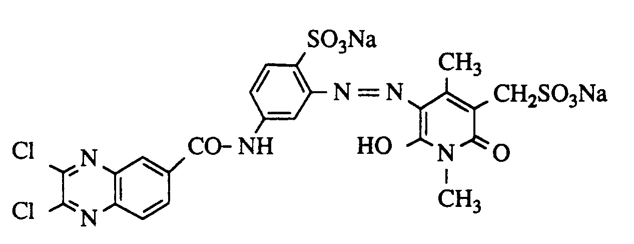
Ersetzt man nun in Beispiel 1 die Kupplungskomponente 3-Aminocarbonyl-1,4-di-methyl-5-sulfomethyl-6-hydroxy-2-pyridon durch vergleichbare Pyridonderivate, so gelangt man zu ebenfalls wertvollen Farbstoffen, die Baumwolle alle in der gleichen grünstichig gelben Nuance färben.

### Beispiel 2

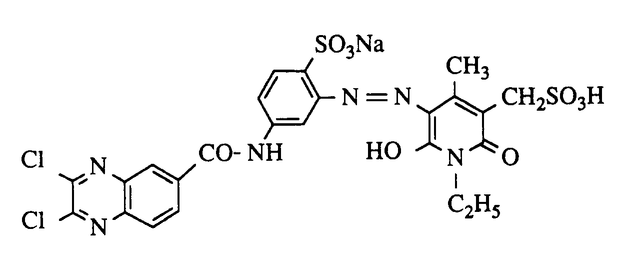

### Beispiel 3

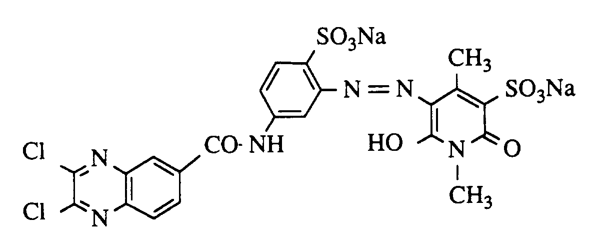

### Beispiel 4

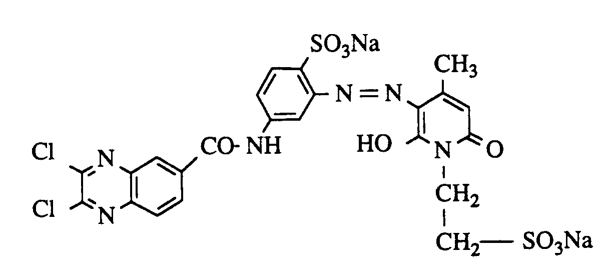

### Beispiel 5

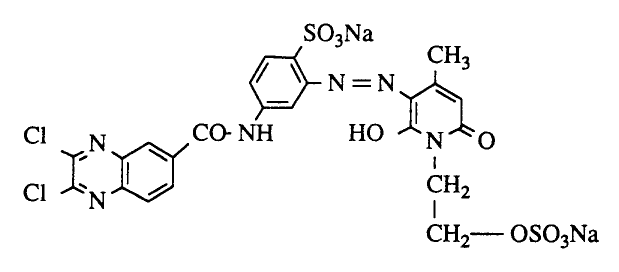

### Beispiel 6

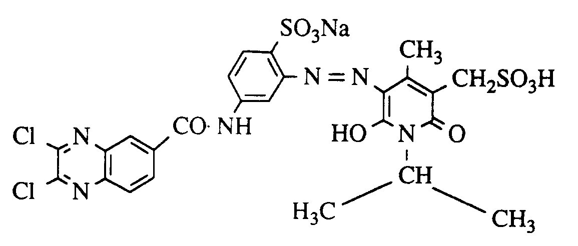

## Patentansprüche

1. Farbstoffe, die in Form ihrer freien Säure folgender Formel (1) entsprechen, 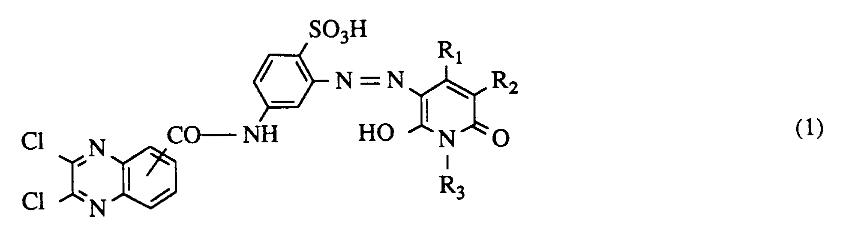 wobei
R₁ = H, gegebenenfalls substituiertes C₁-C₆-Alkyl, CO₂H, CH₂SO₃H, 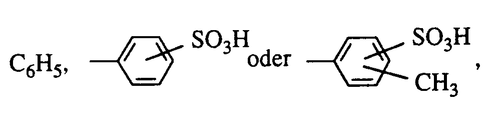
R₂ = H, CH₃, Cl, Br, SO₃H, 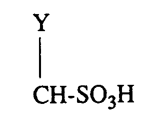 oder CH₂CO₂H
wobei
Y für Wasserstoff oder gegebenenfalls substituiertes C₁-C₆-Alkyl steht,
R₃ = H, gegebenenfalls substituiertes C₁-C₆Alkyl, 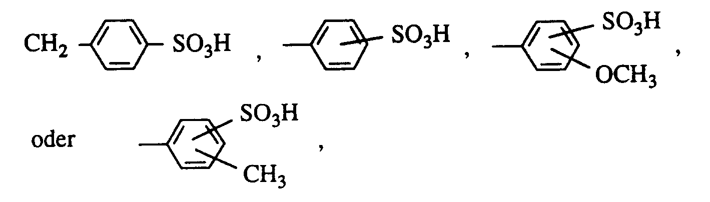
mit der Maßgabe, daß der Pyridonrest mit wenigstens einem Sulfato- oder Sulfonsäurerest substituiert ist.

2. Farbstoff gemäß Anspruch 1 folgender Formel 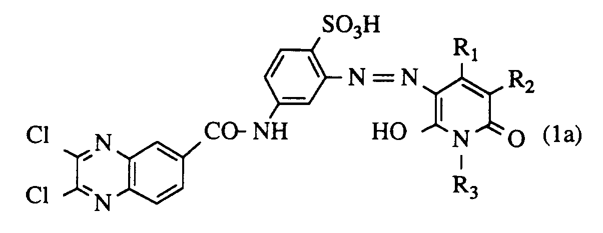 wobei R₁ bis R₃ und Y die angegebene Bedeutung haben.

3. Farbstoffe gemäß Anspruch 1 folgender Formel 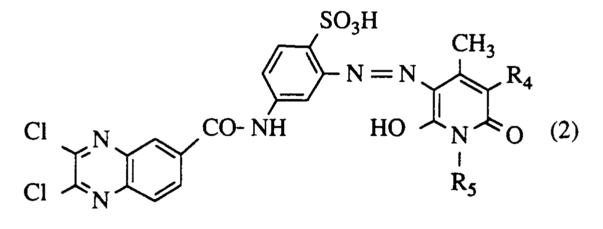 wobei
R₄ = CH₂SO₃H, SO₃H und 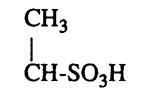
R₅ für Wasserstoff oder gegebenenfalls durch Hydroxy, Methoxy, Ethoxy, Carboxy oder Chlor substituiertes C₁-C₄-Alkyl steht.

4. Farbstoffe gemäß Anspruch 1 folgender Formel 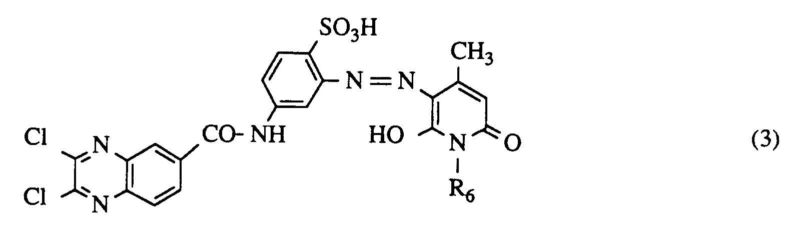 wobei
R₆ = CH₂CH₂SO₃H, CH₂CH₂OSO₃H,

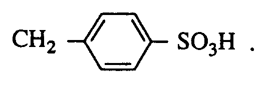

5. Farbstoffe gemäß Anspruch 1 folgender Formel 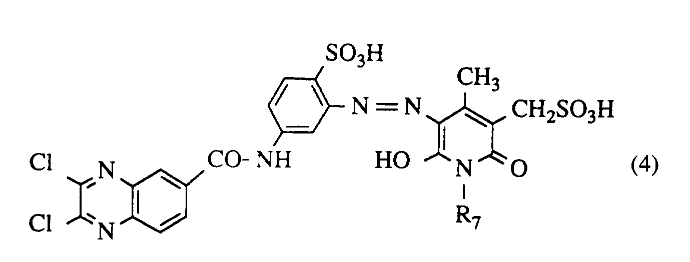 wobei
R₇= H, CH₃ oder C₂H₅.

6. Verfahren zur Herstellung der Verbindungen gemäß Anspruch 1, indem man
a) Aminoazofarbstoffe der Struktur (5), 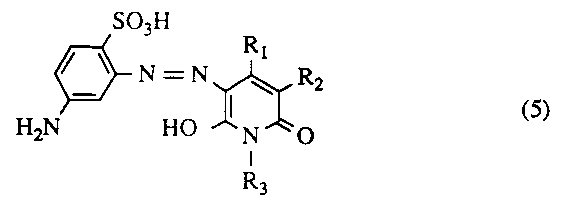 wobei
R₁, R₂ und R₃ die in Anspruch 1 genannte Bedeutung haben,
mit 2,3-Dichlor-6-(bzw.5-)chinoxalincarbonsäurechlorid in Gegenwart säurebindender Mittel kondensiert, oder aber
b) das Monokondensationsprodukt aus 2,4-Diaminobenzolsulfonsäure und 2,3-Dichlor-6-(bzw.5-)chinoxalincarbonsäurechlorid in üblicher Weise diazotiert und auf sulfato- oder sulfogruppenhaltige Pyridone der Struktur (6) oder solche der Struktur (7), 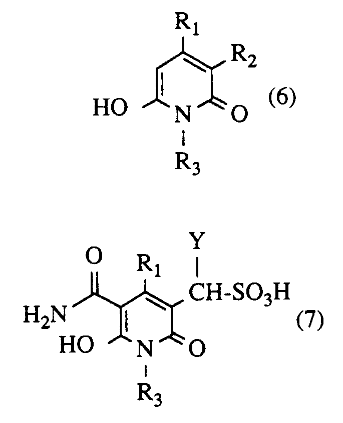 wobei
R₁, R₂,R₃ und Y die in Anspruch 1 genannte Bedeutung haben,
kuppelt.

7. Verfahren zum Färben oder Bedrucken eines faserhaltigen Materials mit einem Farbstoff, dadurch gekennzeichnet, daß ein Farbstoff gemäß Anspruch 1 verwendet wird.

## Claims

1. Dyes which in the form of their free acid conform to the following formula (1): 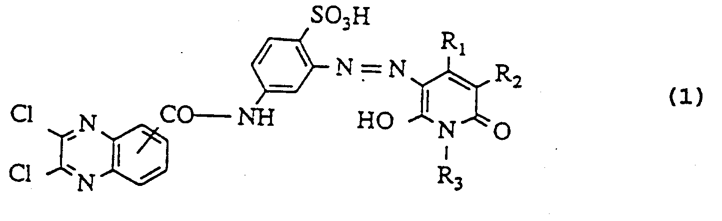 where
R₁ = H, optionally substituted C₁-C₆-alkyl, CO₂H, CH₂SO₃H, C₆H₅, 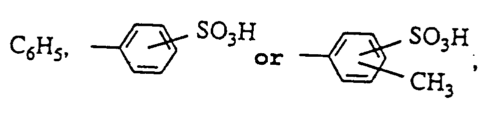
R₂ = H, CH₃, Cl, Br, SO₃H, 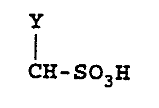 or CH₂CO₂H
where
Y is hydrogen or optionally substituted C₁-C₆-alkyl,
R₃ = H, optionally substituted C₁-C₆-alkyl, 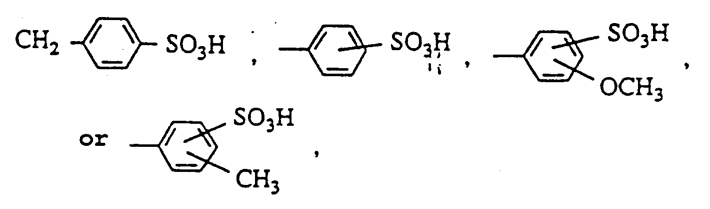
with the proviso that the pyridone radical is substituted by at least one sulphato or sulphonic acid radical.

2. Dye according to Claim 1 of the following formula: 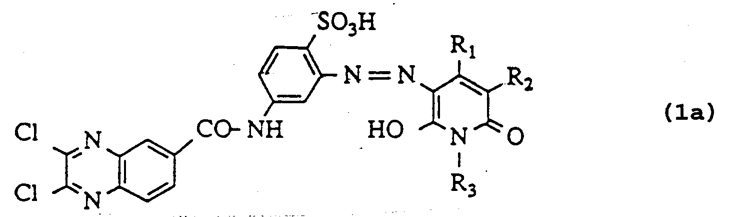 where R₁ to R₃ and Y are each as defined.

3. Dyes according to Claim 1 of the following formula: 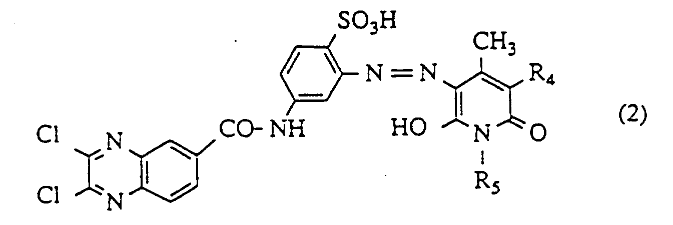 where
R₄ = CH₂SO₃H, SO₃H and 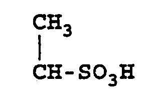
R₅ is hydrogen or optionally hydroxyl-, methoxy-, ethoxy-, carboxyl- or chlorine-substituted C₁-C₄-alkyl.

4. Dyes according to Claim 1 of the following formula: 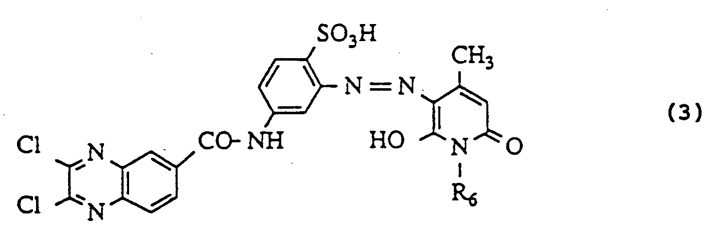 where
R₆ = CH₂CH₂SO₃H, CH₂CH₂OSO₃H,

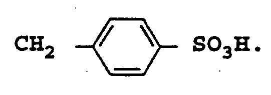

5. Dyes according to Claim 1 of the following formula: 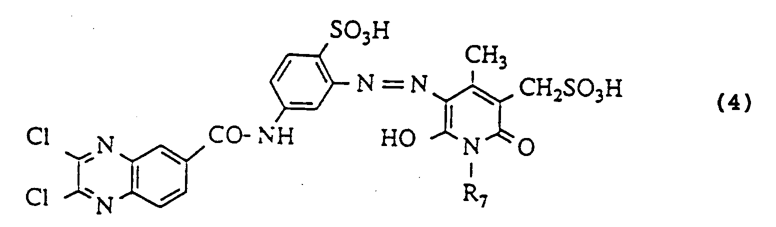 where
R₇ = H, CH₃ or C₂H₅.

6. Process for preparing the compounds according to Claim 1 by
a) condensing aminoazo dyes of the structure (5) 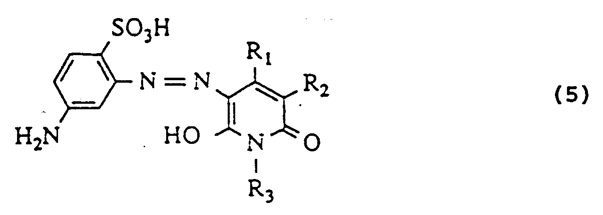 where
R₁, R₂ and R₃ are each as defined in Claim 1, with 2,3-dichloro-6-(or 5-)quinoxalinecarbonyl chloride in the presence of acid-binding agents, or else
b) diazotizing the monocondensation product of 2,4-diaminobenzenesulphonic acid and 2,3-dichloro-6-(or 5-)quinoxalinecarbonyl chloride in conventional manner and coupling the diazotization product onto sulphato- or sulpho-containing pyridones of the structure (6) or those of the structure (7) 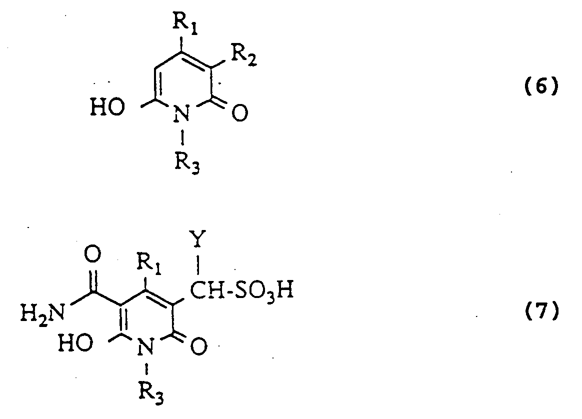 where
R₁, R₂, R₃ and Y are each as defined in Claim 1.

7. Process for dyeing or printing a fibre-containing material with a dye, characterized in that a dye of Claim 1 is used.

## Revendications

1. Colorants qui, à l'état d'acides libres, répondent à la formule 1 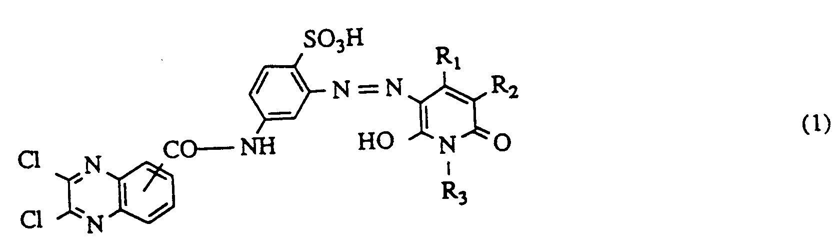 dans laquelle
R₁ = H, alkyle en C₁-C₆ éventuellement substitué, CO₂H, CH₂SO₃H, 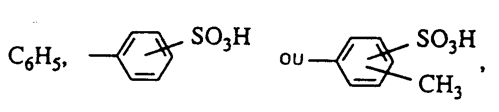
R₂ = H, CH₃, Cl, Br, SO₃H, 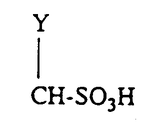 ou CH₂CO₂H
Y représente l'hydrogène ou un groupe alkyle en C₁-C₆ éventuellement substitué,
R₃ = H, alkyle en C₁-C₆ éventuellement substitué, 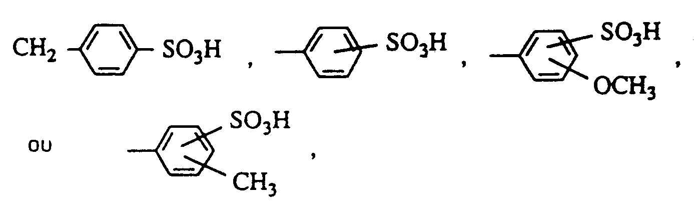
sous réserve que le groupe pyridone porte au moins un substituant sulfato ou acide sulfonique.

2. Colorant selon la revendication 1, répondant à la formule 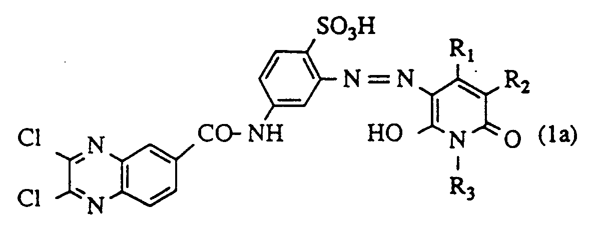 dans laquelle R₁ à R₃ et Y ont les significations indiquées ci-dessus.

3. Colorants selon la revendication 1, répondant à la formule 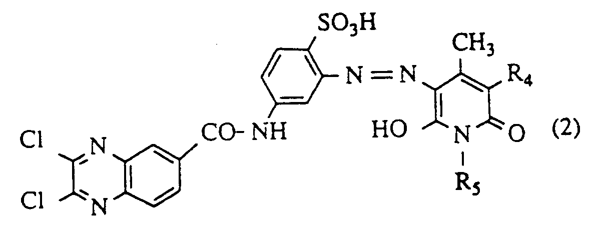 dans laquelle
R₄ = CH₂SO₃H, SO₃H und 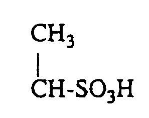
R₅ représente l'hydrogène ou un groupe alkyle en C₁-C₄ portant éventuellement des substituants hydroxy, méthoxy, éthoxy, carboxy ou chloro.

4. Colorants selon revendication la 1, répondant à la formule 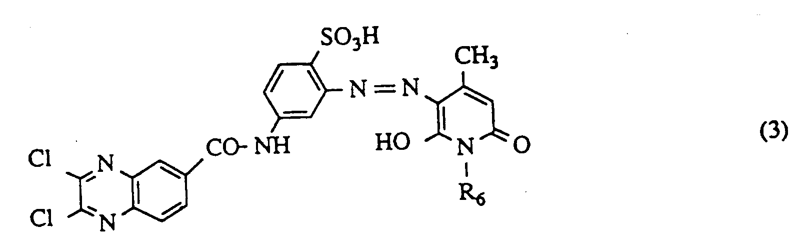 dans laquelle
R₆ = CH₂CH₂SO₃H, CH₂CH₂OSO₃H,

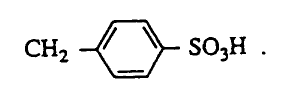

5. Colorants selon la revendication 1, répondant à la formule 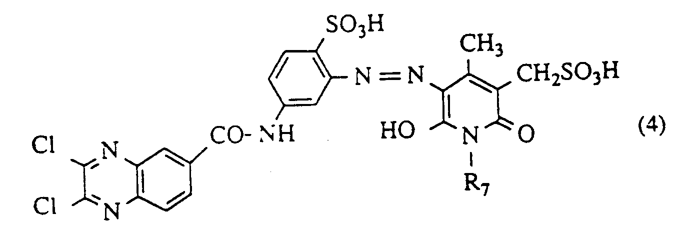 dans laquelle
R₇ = H, CH₃ ou C₂H₅

6. Procédé de préparation des composés selon la revendication 1, selon lequel
a) on condense des colorants aminoazoïques de structure (5) 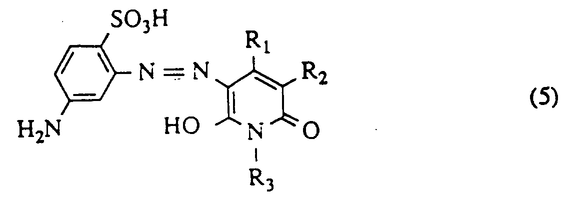 dans laquelle R₁, R₂ et R₃ ont les significations indiquées dans la revendication, avec le chlorure de l'acide 2,3-dichloro-6-(ou 5)-quinoxaline-carboxylique en présence d'accepteurs d'acides, ou bien
b) on diazote de la manière habituelle le produit de monocondensation de l'acide 2,4-diaminobenzène-sulfonique et du chlorure de l'acide 2,3-dichloro-6-(ou 5)-quinaxoline-carboxylique et on copule sur des pyridones portant des groupes sulfato ou sulfo, de structure (6) ou (7) 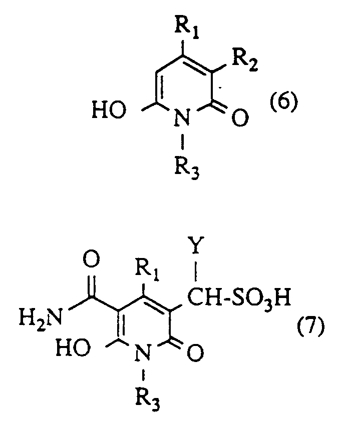 dans lesquelles R₁, R₂, R₃ et Y ont les significations indiquées dans la revendication 1.

7. Procédé pour la teinture ou l'impression d'une matière fibreuse par un colorant, caractérisé en ce que l'on utilise un colorant selon revendication 1.
